# FASCICULE DE BREVET EUROPEEN

(11) **EP 0 983 435 B1**
(45) Date de publication et mention de la délivrance du brevet: **23.01.2002**
(21) Numéro de dépôt: 98925732.4
(22) Date de dépôt: 15.05.1998
(51) Int. Cl.: F02N 17/06, B60H 1/00

(54) **BLOC DE PRECHAUFFAGE DU LIQUIDE DE REFROIDISSEMENT POUR VEHICULE A MOTEUR THERMIQUE**
KÜHLFLÜSSIGKEITSVORWÄRMUNG FÜR VERBRENNUNGSMOTOR
COOLING LIQUID PRE-HEATING UNIT FOR THERMAL ENGINE

(30) Priorité: 15.05.1997 FR 9706212
(43) Date de publication de la demande: 08.03.2000
(73) Titulaire: Valfond Alliages Legers, 74200 Thonon-Les-Bains (FR)
(72) Inventeur: ROBERT, Alain, F-01390 Civrieux (FR)
(74) Mandataire: Bratel, Gérard
(86) Numéro de dépôt international: FR9800985
(87) Numéro de publication internationale: WO9851927

(56) Documents cités:
- FR-A- 1 004 743
- US-A- 3 919 520
- US-A- 3 943 325
- US-A- 3 969 605

## Description

La présente invention concerne un bloc de préchauffage du liquide de refroidissement, tel que de l'eau, pour un véhicule à moteur thermique et, plus particulièrement, un véhicule automobile avec moteur à combustion.

D'une façon générale, ce bloc de préchauffage est intercalé sur le circuit parcouru par le liquide de refroidissement, et reliant le moteur du véhicule à un aérotherme, ledit circuit servant aussi bien au refroidissement du moteur qu'au chauffage de l'habitacle du véhicule. L'insertion d'un tel bloc de préchauffage permet, d'une part, d'améliorer le confort de l'usager à la mise en marche du véhicule, en période froide, en accélérant la montée en température de l'ambiance de l'habitacle. D'autre part, le bloc de préchauffage permet d'accélérer la montée en température du moteur lui-même, en faisant circuler dans ce dernier un liquide réchauffé, ce qui entraîne une moindre consommation de carburant et une diminution de la pollution lors de la mise en route du véhicule.

Pour réaliser les fonctions indiquées ci-dessus, on connaît déjà un dispositif de préchauffage qui se fixe directement sur le bloc-moteur du véhicule, au départ du circuit d'eau. Ce dispositif connu est pourvu de trois bougies électriques de préchauffage, mises au contact du liquide de refroidissement.

Le dispositif existant comporte divers inconvénients :
- Etant fixé au moteur, le dispositif de préchauffage doit être conçu en fonction de chaque moteur et ne peut être standardisé.
- Ce dispositif, situé au niveau du moteur, est nécessairement éloigné de l'aérotherme, ce qui réduit son efficacité notamment en raison des pertes calorifiques se produisant au niveau des durites du circuit de refroidissement.
- Etant pourvu seulement de trois bougies de même puissance, et possédant un corps réalisé d'une seule pièce, le dispositif de préchauffage connu est relativement encombrant, et sa fabrication reste assez compliquée et coûteuse.
- Toujours en raison du faible nombre des bougies, le dispositif ici considéré possède des paliers de puissance de chauffage peu nombreux et éloignés les uns des autres.

On connaît aussi, par le brevet français N° 1004743 (servant de base au préambule de la revendication 1), un dispositif de préchauffage de liquide de refroidissement, comprenant deux coquilles montées en sens opposés suivant un axe central commun, et assemblées l'une contre l'autre de façon étanche, par soudure. Chaque coquille comprend une partie creuse de plus grand diamètre, et une partie tubulaire de plus petit diamètre constituant un embout de raccordement au circuit de refroidissement. Les parties creuses accolées des deux coquilles délimitent une cavité, dans laquelle est logé un élément chauffant unique, réalisé sous la forme d'une résistance électrique chauffante, enroulée en hélice, les deux extrémités de cette résistance traversant respectivement les deux demi-coquilles. Etant ici unique, l'élément chauffant ne procure pas de paliers de puissance. De plus, cet élément reliant les deux coquilles par l'intérieur, l'assemblage et le démontage du dispositif restent problématiques. Par ailleurs, l'élément chauffant enroulé en hélice, et traversé suivant son axe par l'écoulement de liquide est moins efficace, du point de vue du rendement, qu'une bougie de chauffage qui "plonge" dans le flux de liquide.

La présente invention vise à éliminer tous ces inconvénients, en fournissant un dispositif de préchauffage indépendant du moteur, donc adaptable à tous véhicules et plus performant, tout en étant plus compact et plus simple à fabriquer, ce dispositif permettant en outre un rapprochement de ses paliers de puissance.

A cet effet, l'invention a pour objet un bloc de préchauffage du liquide de refroidissement pour véhicule à moteur thermique, le bloc de préchauffage étant composé de deux demi-blocs sensiblement identiques montés en sens opposés suivant un axe central commun et assemblés l'un contre l'autre avec étanchéité, chaque demi-bloc comprenant d'une part une partie creuse de plus grand diamètre, et d'autre part une partie tubulaire de plus petit diamètre constituant un embout de raccordement au circuit parcouru par le liquide de refroidissement, les deux demi-blocs étant accolés par leurs parties creuses de plus grand diamètre pour délimiter une cavité qui est apte à être remplie par le liquide de refroidissement et dans laquelle est engagé au moins un élément chauffant, ce bloc de préchauffage étant caractérisé en ce que chaque demi-bloc comporte, en tant qu'éléments chauffants, au moins deux bougies de chauffage individuelles, de direction sensiblement radiale, reçues respectivement dans au moins deux perçages que présente sa partie creuse de plus grand diamètre.

Le bloc de préchauffage, ainsi constitué, constitue un dispositif autonome qui possède, en particulier, les avantages suivants :
- Etant conçu comme un dispositif indépendant du moteur, le bloc de préchauffage objet de l'invention est un composant universel, pouvant être monté sur tous véhicules.
- En raison de sa conception, le bloc de préchauffage est peu encombrant et léger, comparativement à sa puissance.
- Ce bloc de préchauffage, indépendant du moteur, peut être monté en tout point du circuit de refroidissement, en fonction de la place disponible, et il peut notamment être rapproché de l'aérotherme, ce qui le rend plus efficace en réduisant les pertes thermiques au niveau des durites.
- Possédant un corps résultant de l'assemblage de deux pièces identiques appelées demi-blocs, chacune de relativement petites dimensions, le dispositif peut être fabriqué et monté de façon simple et économique, les deux demi-blocs étant notamment des pièces de fonderie issues du même moule.
- Les bougies de chauffage étant au nombre minimum de quatre, soit au moins deux bougies par demi-blocs, on obtient un bloc de préchauffage qui possède des paliers de puissance plus nombreux et plus rapprochés, permettant une meilleure adaptation aux besoins particuliers de préchauffage.

Selon une forme de réalisation préférée de l'invention, chaque demi-bloc présente deux perçages décalés axialement et angulairement l'un par rapport à l'autre, de sorte que les quatre bougies de chauffage, que comporte au total le bloc de préchauffage, présentent une disposition d'ensemble en quinconce. On obtient ainsi une disposition particulièrement avantageuse des bougies :
- Les parties des bougies plongées dans le flux de liquide sont situées sensiblement sur l'axe central du bloc de préchauffage, et contrarient ainsi ce flux de manière à assurer le préchauffage du liquide de refroidissement avec un rendement élevé, les parties intérieures des bougies restant cependant assez espacées pour ne pas créer un obstacle excessif à la circulation du liquide et ne pas surchauffer ce liquide.
- Les parties extérieures des différentes bougies sont suffisamment écartées les unes des autres pour permettre un raccordement aisé des conducteurs électriques d'alimentation desdites bougies, ces parties extérieures étant en outre alignées deux par deux ce qui permet de rationaliser les connexions électriques.

Dans la mesure où le décalage angulaire des perçages recevant les bougies de chauffage reste relativement faible, par exemple de l'ordre de 15°, les connexions électriques sont regroupées sur un côté du bloc de préchauffage de sorte qu'il est aisé de prévoir, sur les deux demi-blocs, des oreilles latérales destinées à l'assemblage de ces deux demi-blocs l'un contre l'autre par des moyens tels que vis, et des bossages latéraux destinés à la fixation du bloc de préchauffage sur un support et/ou à la fixation d'accessoires sur ce bloc de préchauffage, les bossages présentant à cet effet des trous lisses ou taraudés qui peuvent posséder diverses orientations.

Quant à l'étanchéité entre les deux demi-blocs, celle-ci peut être assurée soit par un joint torique, soit par un dépôt de silicone, mis en compression par le serrage des moyens d'assemblage de ces deux demi-blocs l'un contre l'autre.

L'invention sera mieux comprise à l'aide de la description qui suit, en référence au dessin schématique annexé représentant, à titre d'exemple, une forme d'exécution de ce bloc de préchauffage du liquide de refroidissement pour véhicule à moteur thermique :
Figure 1 est un schéma montrant l'implantation d'un bloc de préchauffage conforme à la présente invention sur un circuit de refroidissement d'un moteur ;
Figure 2 est une vue d'ensemble, en perspective partiellement éclatée, du bloc de préchauffage ;

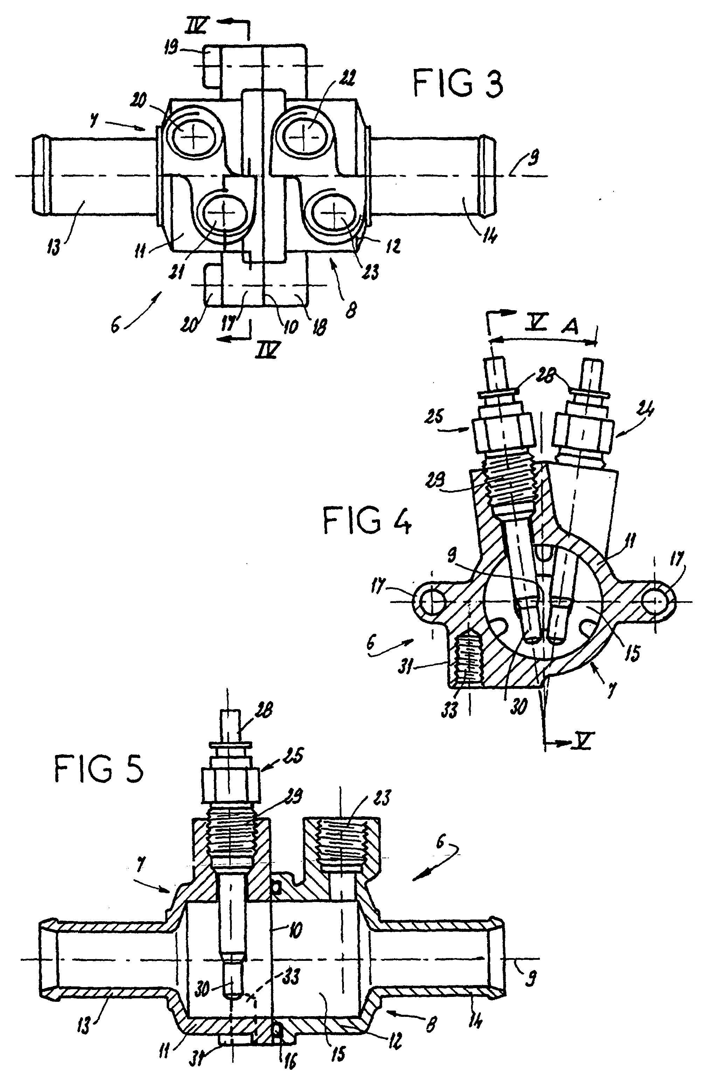

Figure 3 est une vue en plan par dessus du bloc de préchauffage, les bougies de chauffage étant supposées enlevées ;
Figure 4 est une vue en coupe transversale du bloc de préchauffage, suivant IV-IV de figure 3 ;
Figure 5 est une vue en coupe longitudinale du bloc de préchauffage, suivant V-V de figure 4.

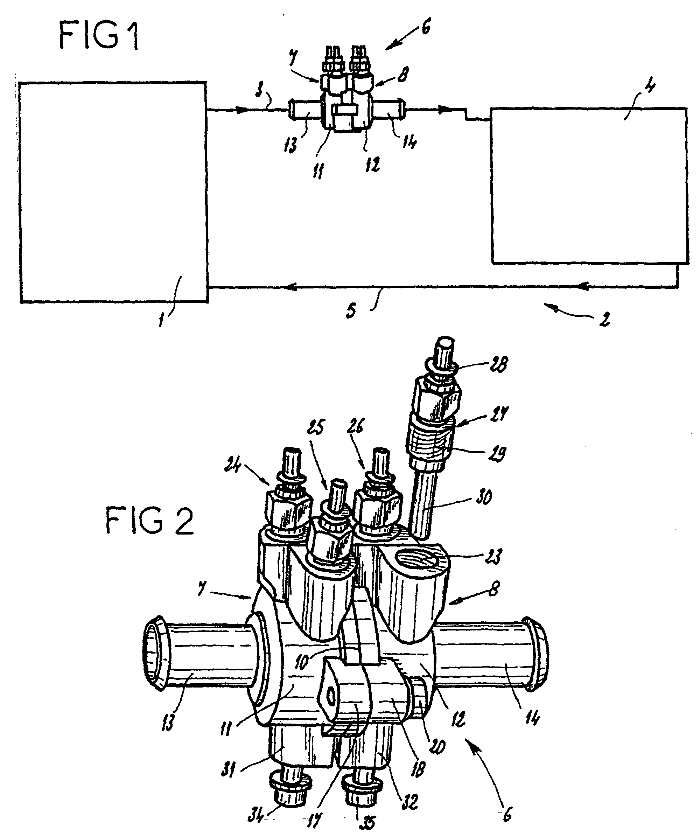

La figure 1 représente, très schématiquement, un moteur 1 de véhicule automobile, et son circuit de refroidissement 2 qui comprend une première branche 3 partant du moteur 1 et menant à un aérotherme 4, et une branche 5 de retour depuis l'aérotherme 4 vers le moteur 1, le circuit 2 étant parcouru par un liquide de refroidissement. Un bloc de préchauffage, désigné dans son ensemble par le repère 6, est monté en un point intermédiaire de la branche 3 du circuit de refroidissement 2. La structure du bloc de préchauffage 6 est bien visible aux figures 2 et suivantes.

Ce bloc de préchauffage 6 est essentiellement composé de deux demi-blocs pratiquement identiques 7 et 8, montés en sens opposés suivant un axe central commun 9, les deux demi-blocs 7 et 8 étant accolés suivant un plan de joint 10 perpendiculaire à l'axe 9.

Chaque demi-bloc 7 et 8 comprend une partie creuse 11 ou 12 de plus grand diamètre, d'allure générale cylindrique, qui se prolonge du côté opposé au plan de joint 10 par une partie tubulaire 13 ou 14 de plus petit diamètre, constituant un embout de raccordement aux éléments de la première branche 3 du circuit de refroidissement 2. Les deux parties creuses 11 et 12 accolées, appartenant respectivement aux deux demi-blocs 7 et 8, définissent le corps principal du bloc de préchauffage 6, et délimitent ensemble une cavité cylindrique 15.

La partie creuse 11 de l'un des deux demi-blocs 8 présente, dans le plan de joint 10, une rainure circulaire recevant un joint torique 16. Les parties creuses 11 et 12 des deux demi-blocs 7 et 8 possèdent extérieurement des paires d'oreilles latérales, respectivement 17 et 18, qui sont mises en correspondance et réunies par des vis d'assemblage 19 et 20, dont le serrage assure la mise en compression du joint torique 16, rendant ainsi la cavité 15 étanche vis-à-vis de l'extérieur.

Les parties creuses 11 et 12 des deux demi-blocs 7 et 8 présentent, chacune, deux perçages respectivement désignés 20, 21 et 22, 23, qui possèdent des orientations sensiblement radiales . Sur chaque partie creuse 11 ou 12, les deux perçages 20, 21 et 22, 23 sont décalées l'un par rapport à l'autre dans la direction de l'axe central 9, et ils sont aussi décalés angulairement l'un par rapport à l'autre, selon un angle A relativement faible, par exemple de 15°. Ainsi, sur le corps principal du bloc de préchauffage 6 résultant de la juxtaposition des deux parties creuses 11 et 12, les quatre perçages 20 à 23 sont disposés non pas en ligne, mais en quinconce, les axes des deux perçages 20 et 22 étant disposés dans un même plan parallèle à l'axe central 9, et les axes des deux autres perçages 21 et 23 étant disposés dans un autre plan parallèle à l'axe central 9, et formant l'angle A avec le plan précédent.

Le corps principal du bloc de préchauffage 6 porte quatre bougies de chauffage 24, 25, 26 et 27, mises en place respectivement dans les quatre perçages 20, 21, 22 et 23, les bougies de chauffage possédant ainsi une disposition en quinconce similaire à celle des perçages. Chacune des quatre bougies 24 à 27 présente une zone extérieure 28 prévue pour son raccordement à des conducteurs électriques, une zone intermédiaire filetée 29 assurant sa fixation dans le perçage 20, 21, 22 ou 23 correspondant, et une partie intérieure se terminant par une extrémité 30 de diamètre réduit, située à l'intérieur de la cavité 15 au voisinage de l'axe central 9. Les bougies 24 à 27 sont fixées de façon étanche dans les perçages 20 à 23 respectifs soit en prévoyant des formes coniques, soit en ajoutant des joints d'étanchéité.

Du côté diamétralement opposé aux perçages 20 à 23 et aux bougies 24 à 27, les parties creuses 11 et 12 des deux demi-blocs 7 et 8 présentent encore des bossages latéraux respectifs 31 et 32, dans lesquels sont ménagés des trous taraudés 33 qui permettent, au moyen de vis 34 et 35, la fixation du bloc de préchauffage 6 sur un support approprié, et/ou la fixation d'accessoires.

Lorsque le bloc de préchauffage 6 est mis en service, notamment à la mise en route du moteur 1 du véhicule concerné, les bougies 24 à 27 qui sont plongées dans le liquide remplissant la cavité 15 à chaque instant assurent le chauffage de ce liquide, qui parcourt le bloc 6 depuis le premier embout de raccordement 13 jusqu'au second embout de raccordement 14, en venant successivement heurter et contourner les extrémités 30 des quatre bougies 24 à 27. Selon les besoins de chauffage, toutes ces bougies 24 à 27, ou certaines d'entre elles seulement, sont simultanément activées, ce qui permet de disposer de plusieurs paliers de puissance relativement rapprochés. Pour augmenter le nombre des paliers de puissance, il est avantageusement prévu que les bougies de chauffage 24, 25, 26 et 27 possèdent des puissances différentes les unes des autres.

L'on ne s'éloignerait pas du cadre de l'invention, telle que définie par les revendications :
- en modifiant les formes de détail des deux demi-blocs 7 et 8 ;
- en remplaçant le joint torique 16, assurant l'étanchéité dans le plan de joint 10 des deux demi-blocs 7 et 8, par un dépôt de silicone ou équivalent ;
- en prévoyant plus de deux bougies de chauffage sur chaque demi-bloc, selon la puissance totale désirée ;
- en modifiant la position des oreilles latérales 17 et 18 traversées par les vis d'assemblage 19 et 20, ou encore en réalisant l'assemblage des deux demi-blocs par des moyens autres que des vis ;
- en prévoyant sur les bossages 31 et 32 des trous plus ou moins nombreux, et selon toute orientation désirée, pour la fixation du bloc de préchauffage sur son support et/ou pour la fixation d'accessoires divers sur ce bloc de préchauffage.

## Revendications

1. Bloc de préchauffage du liquide de refroidissement pour véhicule à moteur thermique, le bloc de préchauffage (6) étant, composé de deux demi-blocs sensiblement identiques (7,8) montés en sens opposés suivant un axe central commun (9), et assemblés l'un contre l'autre avec étanchéité (16), chaque demi-bloc (7,8) comprenant d'une part une partie creuse (11,12) de plus grand diamètre, et d'autre part une partie tubulaire (13,14) de plus petit diamètre constituant un embout de raccordement au circuit (2) parcouru par le liquide de refroidissement, les deux demi-blocs (7,8) étant accolés par leurs parties creuses (11,12) de plus grand diamètre pour délimiter une cavité (15) qui est apte à être remplie par le liquide de refroidissement et dans laquelle est engagé au moins un élément chauffant, **caractérisé en ce que** chaque demi-bloc (7,8) comporte, en tant qu'éléments chauffants, au moins deux bougies de chauffage (24,25; 6,27) individuelles, de direction sensiblement radiale, reçues respectivement dans au moins deux perçages (20,21 ; 26,27) que présente sa partie creuse (11,12) de plus grand diamètre.

2. Bloc de préchauffage selon la revendication 1, **caractérisé en ce que** chaque demi-bloc (7,8) présente deux perçages (20,21;22,23) décalés axialement et angulairement l'un par rapport à l'autre, de sorte que les quatre bougies de chauffage (24 à 27), que comporte au total le bloc de préchauffage (6), présentent une disposition d'ensemble en quinconce.

3. Bloc de préchauffage selon la revendication 2,
**caractérisée en ce que** le décalage angulaire (A) des perçages (20,21;22,23) recevant les bougies de chauffage (24,25;26,27) est relativement faible, par exemple de l'ordre de 15°.

4. Bloc de préchauffage selon l'une quelconque des revendications 1 à 3, **caractérisé en ce que** sont prévues, sur les deux demi-blocs (7,8), des oreilles latérales (17,18) destinées à l'assemblage de ces deux demi-blocs (7,8) l'un contre l'autre par des moyens tels que vis (19,20).

5. Bloc de préchauffage selon la revendication 4, **caractérisé en ce que** l'étanchéité entre les deux demi-blocs (7,8) est assurée par un joint torique (16) ou un dépôt de silicone, mis en compression par le serrage des moyens (19,20) d'assemblage de ces deux demi-blocs (7,8) l'un contre l'autre.

6. Bloc de préchauffage selon l'une quelconque des revendications 1 à 5, **caractérisé en ce que** sont prévus, sur les deux demi-blocs (7,8), des bossages latéraux (31,32) destinés à la fixation du bloc de préchauffage (6) sur un support et/ou à la fixation d'accessoires sur ce bloc de préchauffage (6).

7. Bloc de préchauffage selon l'une quelconque des revendications 1 à 6, **caractérisé en ce que** les bougies de chauffage (24 à 27) possèdent des puissances différentes les unes des autres.

## Patentansprüche

1. Kühlflüssigkeitsvorwärmung für Fahrzeuge mit Verbrennungsmotor, wobei der Vorwärm-Block (6) zusammengesetzt ist aus zwei im wesentlichen identischen Halb-Blöcken (7, 8), die entlang einer gemeinsamen Achse (9) einander gegenüberliegend montiert und mit Abdichtung (16) aneinandergefügt sind, wobei jeder Halb-Block (7, 8) einerseits einen hohlen Teil (11, 12) mit größerem Durchmesser und andererseits einen röhrenförmigen Teil (13, 14) mit kleinerem Durchmesser umfasst, welcher ein Ansatzstück für die Verbindungsherstellung zu dem Kreislauf (2) bildet, der von der Kühlflüssigkeit durchlaufen wird, wobei die zwei Halb-Blöcke (7, 8) mit ihren hohlen Teilen (11,12) mit größerem Durchmesser aneinandergefügt sind, um einen Hohlraum (15) abzugrenzen, der geeignet ist, mit der Kühlflüssigkeit gefüllt zu werden und in den mindestens ein Heizelement hineingesteckt ist, **dadurch gekennzeichnet, dass** jeder Halb-Block (7, 8), als Heizelemente, mindestens zwei einzelne Heizkerzen (24, 25; 26, 27) umfasst, die im wesentlichen radial ausgerichtet sind und jeweils in mindestens zwei Bohrungen (20, 21; 22, 23) aufgenommen werden, die der hohle Teil (11, 12) mit größerem Durchmesser aufweist.

2. Vorwärm-Block nach Anspruch 1, **dadurch gekennzeichnet, dass** jeder Halb-Block (7, 8) zwei Bohrungen (20, 21; 22, 23) aufweist, die axial und winklig gegeneinander versetzt sind, so dass die vier Heizkerzen (24 bis 27), die der Vorwärm-Block (6) insgesamt umfasst, eine Gruppenanordnung im Zickzack zeigen.

3. Vorwärm-Block nach Anspruch 2, **dadurch gekennzeichnet, dass** die Winkelverschiebung (A) der Bohrungen (20, 21; 22, 23), die die Heizkerzen (24, 25; 26, 27) aufnehmen, relativ klein, zum Beispiel in der Größenordnung von 15° ist.

4. Vorwärm-Block nach einem der Ansprüche 1 bis 3, **dadurch gekennzeichnet, dass** an den zwei Halb-Blöcken (7, 8) seitliche Ösen (17, 18) vorgesehen sind, die dem Zusammenbau dieser zwei Halb-Blöcke (7, 8) gegeneinander mit Mitteln wie Schrauben (19, 20) dienen.

5. Vorwärm-Block nach Anspruch 4, **dadurch gekennzeichnet, dass** die Abdichtung zwischen den zwei Halb-Blöcken (7, 8) gewährleistet ist durch einen Runddichtring (16) oder eine Silikon-Schicht, die durch das Festziehen der Mittel (19, 20) zum Zusammenbau dieser zwei Halb-Blöcke (7, 8) komprimiert wird.

6. Vorwärm-Block nach einem der Ansprüche 1 bis 5, **dadurch gekennzeichnet, dass** an den zwei Halb-Blöcken (7, 8) seitliche Buckelvorsprünge (31, 32) vorgesehen sind, die der Befestigung des Vorwärm-Blocks (6) auf einer Auflage und/oder der Befestigung von Zubehörteilen an diesem Vorwärm-Block (6) dienen.

7. Vorwärm-Block nach einem der Ansprüche 1 bis 6, **dadurch gekennzeichnet, dass** die Heizkerzen (24 bis 27) untereinander verschiedene Leistungen besitzen.

## Claims

1. A preheater block for the coolant liquid for a heat engine vehicle, said preheater block (6) being composed of two substantially identical half-blocks (7, 8) mounted opposite each other along a common central axis (9), and fitted to each other with leak-tightness (16), each half block (7, 8) firstly comprising a hollow part (11, 12) of larger diameter, and secondly comprising a tubular part (13, 14) of smaller diameter which forms a connecting piece to the circuit (2) through which the coolant liquid flows, said two half blocks (7, 8) being joined by their hollow parts (11, 12) of larger diameter so as to delimit a cavity (15) which can be filled by the coolant liquid and into which at least one heating element fits, **characterised in that** each half block (7, 8) comprises at least two individual, substantially radially oriented heater plugs (24, 25; 26, 27) as heating elements which are received respectively in at least two bores (20, 21; 6, 27) which are provided in said hollow part (11,12) of larger diameter.

2. A preheater block according to claim 1, **characterised in that** each half block (7, 8) comprises two bores (20, 21; 22, 23) which are axially and angularly offset in relation to each other, so that the four heater plugs (24 to 27) which the preheater block (6) comprises in total are in a staggered arrangement as a whole.

3. A preheater block according to claim 2, **characterised in that** that the angular offset (A) of the bores (20, 21; 22, 23) which receive the heater plugs (24, 25; 26, 27) is relatively slight, for example of the order of 15°.

4. A preheater block according to one any of claims 1 to 3, **characterised in that** side lugs (17, 18) intended for fitting said two half blocks (7, 8) to each other by means such as screws (19, 20) are provided on the two half blocks (7, 8).

5. A preheater block according to claim 4, **characterised in that** leak-tightness between the two half blocks (7, 8) is ensured by an O-ring joint (16) or by a layer of silicone, which is placed under compression by tightening the means (19, 20) for fitting said two half blocks (7,8) to each other.

6. A preheater block according to one any one of claims 1 to 5, **characterised in that** side projections (31, 32) intended for the fixing of the preheating block (6) to a support and/or for the fixing of accessories to said preheater block (6) are provided on the two half blocks (7, 8).

7. A preheater block according to one any of claims 1 to 6, **characterised in that** the heater plugs (24 to 27) have outputs which are different from each other.
